# EUROPEAN PATENT APPLICATION

(11) **EP 3 604 746 A1**
(43) Date of publication of application: **05.02.2020**
(21) Application number: 19183834.1
(22) Date of filing: 02.07.2019
(51) Int. Cl.: F01D 17/16, F04D 29/56, F04D 27/02

(54) **CRANKSHAFT ASSEMBLY**

(30) Priority: 02.08.2018 GB 201812586
(71) Applicant: Rolls-Royce plc, London SW1E 6AT (GB)
(72) Inventor: Karapurath, Neelambaran, Derby, Derbyshire DE24 8BJ (GB); Swann, Andrew, Derby, Derbyshire DE24 8BJ (GB)
(74) Representative: Rolls-Royce plc

(57) **Abstract**

The present disclosure relates to a crankshaft assembly for a gas turbine engine guide vane actuator. Example embodiments include a crankshaft assembly (800) for a gas turbine engine guide vane actuator, the crankshaft assembly (800) comprising: a crankshaft (801) mounted for rotation about a central axis (811); a lug (802) mounted to the crankshaft (801) for rotation with the crankshaft (801) about the central axis (811), the lug (802) having a first end (803) with a crankshaft connection (820) securing the lug (802) to the crankshaft (801) and a second opposing end (805) for connecting the lug (802) to a control rod (408) such that rotation of the crankshaft (801) causes actuation of the control rod (408) in a direction orthogonal to the central axis (811), wherein the crankshaft connection (820) is adjustable to allow the first end of the lug (802) to be secured relative to the crankshaft (801) over a range of rotational positions about the central axis (811).

## Description

The present disclosure relates to a crankshaft assembly for a gas turbine engine guide vane actuator.

An aircraft gas turbine engine comprises guide vanes located towards the front of the compressor downstream from the fan, which serve to counteract the rotational movement of the air imparted by the fan. The angle of the guide vanes can typically be varied using a mechanism comprising a crankshaft actuated by a hydraulic actuator under control of the electronic engine control (EEC). During engine development in particular, the range of movement of the guide vanes may need to be adjusted, which can require extensive disassembly and reassembly of the engine. It would therefore be advantageous to be able to adjust the range of movement of a guide vane actuator assembly with a reduced amount of intervention and without introducing excessive additional weight or complexity to the engine.

According to a first aspect there is provided a crankshaft assembly for a gas turbine engine guide vane actuator, the crankshaft assembly comprising:
a crankshaft mounted for rotation about a central axis;
a lug mounted to the crankshaft for rotation with the crankshaft about the central axis, the lug having a first end with a crankshaft connection securing the lug to the crankshaft and a second opposing end for connecting the lug to a control rod such that rotation of the crankshaft causes actuation of the control rod in a direction orthogonal to the central axis,
wherein the crankshaft connection is adjustable to allow the first end of the lug to be secured relative to the crankshaft over a range of rotational positions about the central axis.

An advantage of the crankshaft assembly according to the present disclosure is that adjustment of the relative rotational position of the crankshaft and lug allows for a change in offset of the guide vane actuator to be made without the need for disassembly or adjustment of the control rod of the guide vane actuator assembly. Adjustments can thereby be made much more quickly than with conventional actuator assemblies.

The crankshaft connection may comprise interlocking teeth on the crankshaft and the lug, which secures the crankshaft to the lug during normal operation. The teeth on the lug may be biased into contact with the teeth on the crankshaft, which maintains the crankshaft in secure connection with the lug during normal operation.

The teeth on the lug may be configured to separate from contact with the teeth on the crankshaft to allow the crankshaft to rotate relative to the lug. The crankshaft assembly may comprise an adjustment element comprising the teeth on the lug, the adjustment element connected to the lug by first and second pivot points and comprising first and second arms extending from opposing sides of the lug, wherein actuation of the first or second arms causes the adjustment element to pivot about the respective second or first pivot points to separate the interlocking teeth from each other.

The crankshaft assembly may comprise first and second end stops arranged to contact the first and second arms respectively upon rotation of the crankshaft beyond an angular rotation limit to cause the interlocking teeth to separate from each other.

In some arrangements, the crankshaft assembly may comprise an actuator connected to the teeth on the lug and configured upon actuation to separate the teeth on the lug from the teeth on the crankshaft to allow rotation of the crankshaft relative to the lug.

In alternative arrangements, the lug may comprise a worm gear, wherein rotation of the worm gear causes rotation of the crankshaft relative to the lug. The worm gear may be rotated manually or by use of a motor connected to the worm gear.

In alternative arrangements, the crankshaft assembly may comprise a releasable clamping element between the lug and the crankshaft. The clamping element secures the lug to the crankshaft for rotation of the lug and crankshaft together, and may be released to allow rotation of the lug relative to the crankshaft.

According to a second aspect there is provided a guide vane actuator assembly for a gas turbine engine, comprising:
a hydraulic actuator connected to a first control rod;
a crankshaft assembly according to the first aspect, the crankshaft assembly comprising an actuator lug pivotally connected to the first control rod;
a second control rod pivotally connected between the second end of the lug and a guide vane actuator ring, the guide vane actuator ring connected to a series of actuator levers connected to ends of a corresponding series of pivotally mounted guide vanes.

According to a third aspect there is provided a gas turbine engine for an aircraft, comprising:
an engine core comprising a turbine, a compressor, and a core shaft connecting the turbine to the compressor;
a fan located upstream of the engine core, the fan comprising a plurality of fan blades; and
a guide vane assembly located downstream of the fan, the guide vane assembly comprising a guide vane actuator assembly according to the second aspect.

The gas turbine engine may further comprise a gearbox that receives an input from the core shaft and outputs drive to the fan so as to drive the fan at a lower rotational speed than the core shaft.

In the gas turbine engine, with the turbine a first turbine, the compressor a first compressor and the core shaft a first core shaft, the engine core may further comprise a second turbine, a second compressor, and a second core shaft connecting the second turbine to the second compressor, the second turbine, second compressor, and second core shaft being arranged to rotate at a higher rotational speed than the first core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the accompanying drawings, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a schematic side view of a guide vane actuator assembly comprising a conventional crankshaft assembly;
Figure 5a is a schematic plan view of a unison ring and an associated guide vane actuator levers with the levers in a central position;
Figure 5b is a schematic plan view of the arrangement of Figure 5a with the guide vane actuator levers actuated clockwise by rotation of the unison ring;
Figure 6a is a schematic sectional diagram of an example crankshaft and control rod assembly for a conventional guide vane actuator with a first length of control rod;
Figure 6b is a schematic sectional diagram of the arrangement of Figure 6a with a longer length of control rod;
Figure 7a is a schematic sectional diagram of an example crankshaft and control rod assembly according to the present disclosure;
Figure 7b is a schematic sectional diagram of the arrangement of Figure 7a with an altered position of the pivot connection;
Figure 8 is a schematic sectional diagram of an example crankshaft assembly;
Figure 9a is a schematic sectional diagram of the crankshaft assembly of Figure 8 operating in normal mode with the crankshaft rotated clockwise to the second angular limit;
Figure 9b is a schematic sectional diagram of the arrangement of Figure 9a with the crankshaft assembly in a central position;
Figure 9c is a schematic sectional diagram of the arrangement of Figure 9a with the crankshaft assembly rotated anticlockwise to the first angular limit;
Figure 10a is a schematic sectional diagram of the crankshaft assembly of Figure 8 operating to adjust a rotation of the crankshaft relative to the lug with the crankshaft rotated beyond the first angular limit;
Figure 10b is a schematic sectional diagram of the arrangement of Figure 10a with the relative rotation of the crankshaft and lug being offset from each other;
Figure 10c is a schematic sectional diagram of the arrangement of Figure 10a with the position of the lug being offset relative to Figure 10b;
Figure 11 is a schematic sectional diagram of an alternative crankshaft assembly;
Figure 12 is a schematic sectional diagram of a further alternative crankshaft assembly; and
Figure 13 is a schematic sectional diagram of a further alternative crankshaft assembly.

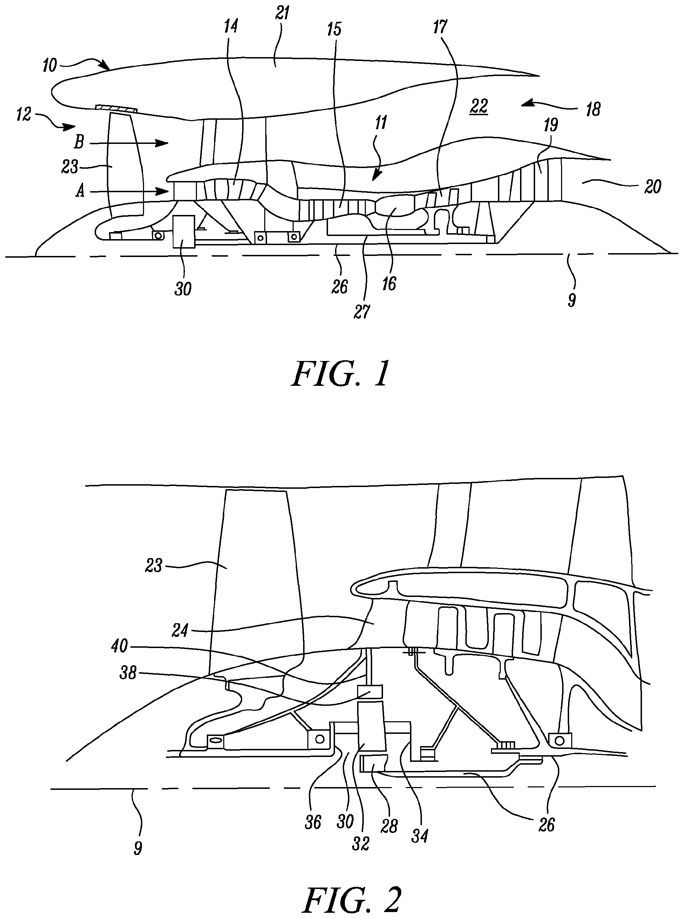

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

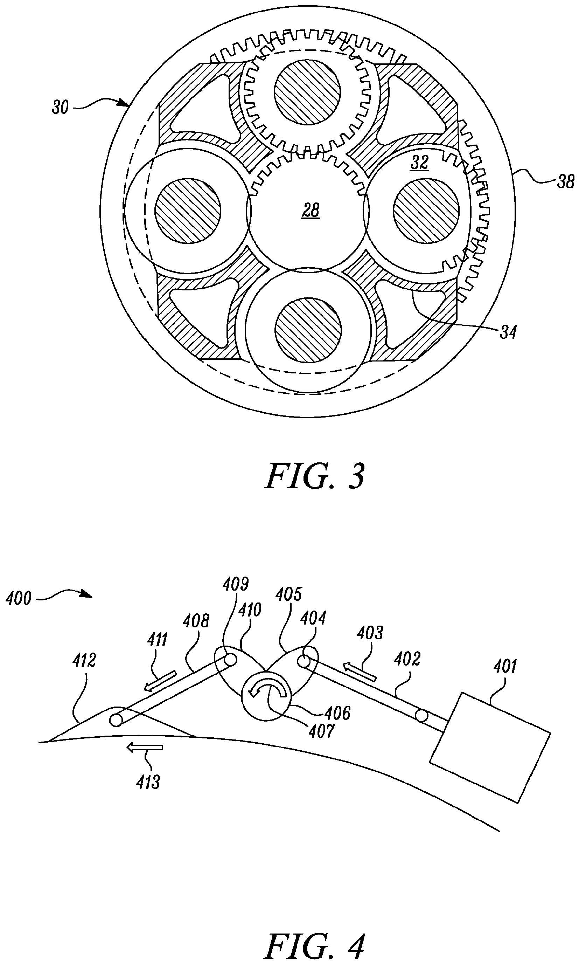

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

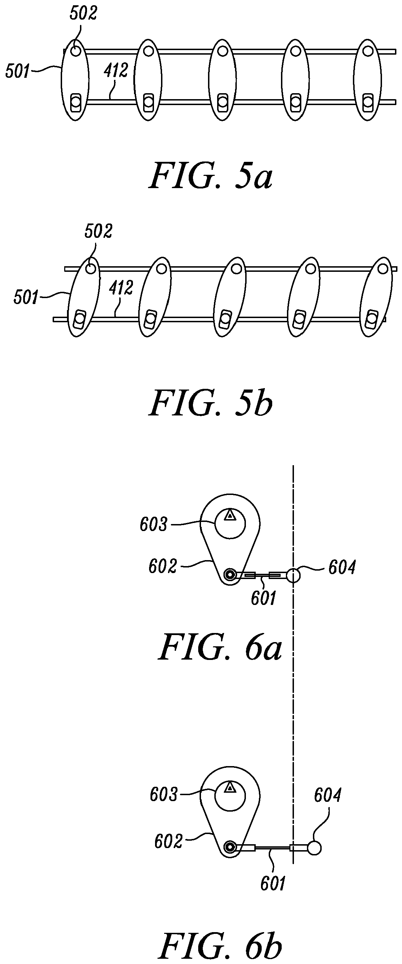

Figure 4 illustrates schematically an example guide vane actuator assembly 400. A hydraulic actuator 401, which is typically fed with aircraft engine fuel as hydraulic fluid (and may therefore be termed a fueldraulic actuator), actuates a first control rod 402 in the direction indicated by arrow 403. A first pivot connection 404 connects the first control rod 402 to a first actuator lug 405 on a rotatably mounted crankshaft 406. Actuation of the first control rod 402 causes the crankshaft 406 to rotate in the direction indicated by arrow 407. A second control rod 408 is connected by a second pivot connection 409 to a second lug 410 extending from the crankshaft 406. Rotation of the crankshaft 406 causes the second lug 410 to rotate and actuate the second control rod 408 in the direction indicated by arrow 411. The second control rod 408 is connected at an opposing end to a guide vane actuation ring 412, commonly known as a unison ring. The unison ring 412 extends around a part of the outer housing of the engine containing the guide vanes, which are located downstream of the fan blades. Rotation of the unison ring 412 by actuation of the second control rod 408 in the direction indicated by arrow 413 causes levers connected to each of a series of guide vanes to rotate, causing the guide vanes to actuate in unison. This is illustrated schematically in Figures 5a and 5b, which shows a section of the unison ring 412 and associated levers 501, each of which is connected to the tip 502 of a pivotally mounted guide vane. Figure 5a shows the levers 501 in a central position, and Figure 5b shows the levers 501 actuated clockwise by rotation of the unison ring 412.

The above described mechanism allows for rotation of the guide vanes by a few degrees, typically around +/- 5 degrees about a central position. More than one set of guide vanes may be actuated by a common crankshaft via separately connected lugs and control rods, allowing multiple unison rings to be actuated with a single fueldraulic actuator.

A problem with such conventional guide vane actuator assemblies is that, once installed, the range of actuation provided for each set of guide vanes is fixed. During engine development programmes in particular, this can be an issue because the range of actuation may need to be adjusted, either for all sets of guide vanes or for each set separately. With the type of guide vane actuator assembly described above, this is typically achieved by adjusting the length of either the first control rod 402 (which affects all sets of actuated guide vanes) or the second control rod 408 (which affects each set separately). Replacing control rods, however, requires removal, adjustment and replacement of the control rods, which requires extensive disassembly of the engine, involving a long period of downtime for the engine for even a small adjustment. An alternative route may involve replacement of the crankshaft 406 and lugs 405, 410 to reposition the lugs 405, 410 relative to each other. Again, this requires extensive disassembly and downtime, along with manufacture of a new crankshaft.

Figures 6a and 6b illustrate schematically the effect of altering the length of a control rod 601 attached to a lug 602 on a crankshaft 603, with Figure 6a showing a first length of control rod 601 and Figure 6b with a longer control rod 601'. Changing the control rod 601 length allows the position of the pivot connection 604 to the unison ring to be altered with the crankshaft in the same position, thereby providing an offset to the unison ring position, and thereby to the position of the guide vanes.

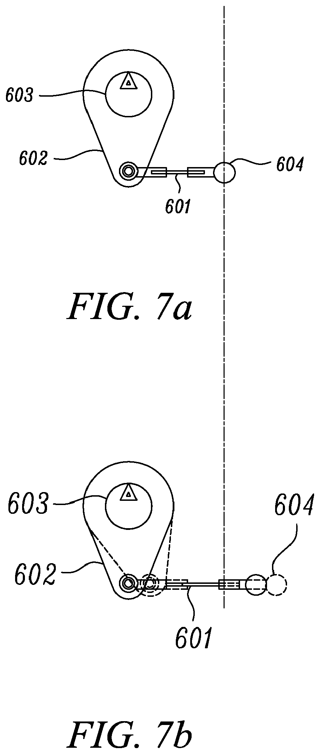

Figures 7a and 7b illustrate an alternative way of providing an offset to the position of the pivot connection 604. The crankshaft 603, lug 602 and control rod 601 in Figure 7a are in the same relative positions as in Figure 6a. In Figure 7b, however, the position of the pivot connection 604 is altered not by changing the length of the control rod 601 but instead by adjusting the relative rotational position of the lug 602 and crankshaft 603. In this way a range of offset positions can be provided to the pivot connection 604 without replacing the control rod 601. There are various ways of achieving this change in rotational position, some examples of which are detailed in the following described embodiments, all of which may be incorporated in a guide vane actuator assembly of the type described above.

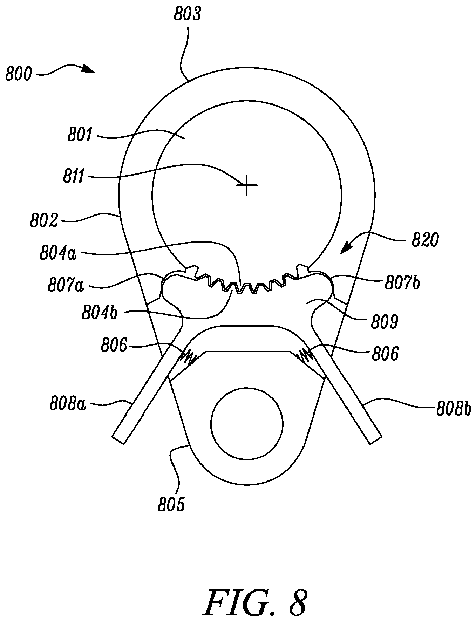

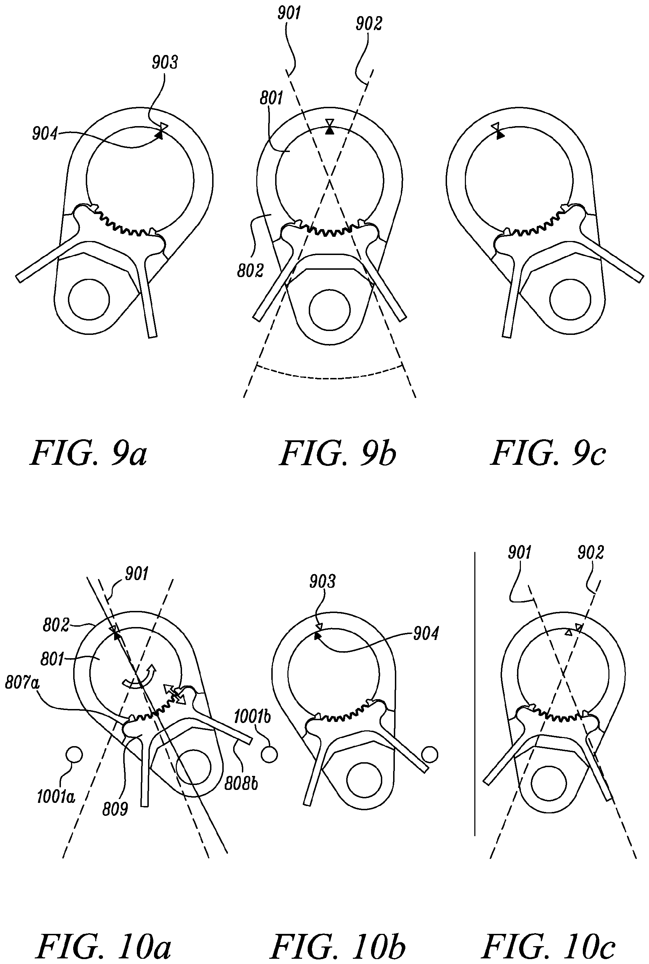

Figure 8 illustrates an example crankshaft assembly 800 comprising a crankshaft 801 with a lug 802 mounted for rotation about a central axis 811 with the crankshaft 801, the lug 802 having a first end 803 with a crankshaft connection 820 securing the lug 802 to the crankshaft 801. In this example, the crankshaft connection 820 comprises interlocking teeth 804a, 804b on the crankshaft 801 and the lug 802. The interlocking teeth 804b on the lug 802 are biased against the teeth 804a on the crankshaft 801 by biasing element such as springs 806 that maintain a force to keep the teeth 804a, 804b interlocked. The teeth 804b form part of an adjustment element 809 that is mounted to a second end 805 of the lug 802. The adjustment element 809 is connected to the crankshaft by first and second pivot points 807a, 807b and comprises first and second arms 808a, 808b. Actuation of the first or second arms 808a, 808b causes the adjustment element 809 to pivot about the respective second or first pivot points 807b, 807a to separate the interlocking teeth 804a, 804b from each other. Actuation of the arms 808a, 808b may for example be achieved by forcing the second end 805 of the lug 802 against an end stop, which is illustrated further in Figure 10. Under normal operation, i.e. with the arms 808a, 808b not actuated, the crankshaft 801 and lug 802 operate together such that rotation of the crankshaft 801 causes corresponding rotation of the lug 802.

Normal operation of the crankshaft 801 and lug 802 is illustrated in Figure 9. In Figure 9b the crankshaft 801 is in a central position, with a maximum range of rotation indicated by first and second angular limits 901, 902. Figure 9a illustrates the crankshaft 801 rotated clockwise to the second angular limit 902, while Figure 9c illustrates the crankshaft 801 rotated anticlockwise to the first angular limit 901. This range corresponds to the normal operational range for actuating a unison ring to cause a set of guide vanes to actuate over a desire range of rotation, which may for example be typically +/- 5 degrees. Reference points 903, 904 on the lug and crankshaft respectively indicate that the relative rotational position of the lug and crankshaft stays constant.

Figure 10 illustrates a process of adjusting the relative position of the lug 802 and crankshaft 801 by forcing the adjustment element 809 against an end stop. In Figure 10a, the crankshaft 801 is rotated beyond the first angular limit 901, causing the second arm 808b to contact an end stop 1001b and cause the adjustment element 809 to pivot about the first pivot point 807a and separate the interlocking teeth on the crankshaft 801 and lug 802. Further rotation beyond the angular limit 901 causes the teeth to move relative to each other by one or more teeth pitch increments. Rotating the crankshaft back from the angular limit 901 then results in the teeth reengaging at an offset position, resulting in the relative rotation of the crankshaft 801 and lug 802 being offset from each other, as indicated by the offset in reference points 903, 904 in Figure 10b. Further operation of the crankshaft within the normal angular limits 901, 902 then results in the position of the lug being offset relative to previously, as illustrated in Figure 10c. This series of operations allows the relative rotational position of the crankshaft and lug to be determined solely by how far the crankshaft is actuated, which can be done without the need for any mechanical adjustment or replacement of the actuator assembly. A predefined software limit can be set to maintain actuation within the angular limits 901, 902 during normal operation. When the relative position of the crankshaft and lug needs to be altered, an adjustment routine can be run that takes the crankshaft beyond its normal angular limit so that a desired offset is then applied, which is then maintained during further normal operation.

A further end stop 1001a is also provided on the opposing side of the lug 802 to allow the relative rotational position of the crankshaft and lug to be adjusted in the opposite sense, the adjustment routine then being the reverse of that described above.

The type of adjustment element described above may, in alternative arrangements, be provided in more than one part, for example with two parts individually pivoted to allow each part to be separately released upon reaching an end stop. Each part may be arranged to allow relative movement in one direction but not the other, so that when one part is released by an end stop the other ratchets along the interlocking teeth.

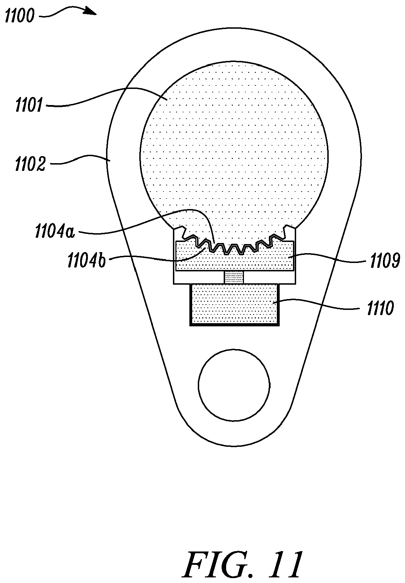

The above described embodiment allows the relative rotation of the lug and crankshaft to be adjusted using only a single input, being that of rotating the crankshaft using the fueldraulic actuator. In some cases more flexibility may be required, for example where multiple lugs are provided on a common crankshaft that operate multiple unison rings. In such cases, adjustments may be required to each lug that are different. To do this, a different mechanism for adjusting the relative position of the crankshaft and lug may be required, based on a similar principle of interlocking teeth on the crankshaft and lug. One example of this is illustrated in Figure 11, in which a crankshaft 1101 and lug 1102 are connected for common rotation by interlocking teeth 1104a, 1104b. The interlocking teeth 1104b on the lug are part of an adjustment element 1109 that is connected to an actuator 1110. The actuator 1110, which may for example be a solenoid, can be operated to separate the teeth 1104b on the lug 1102 from the teeth 1104a on the crankshaft 1101. An adjustment operation can therefore involve providing an actuation signal to the actuator 1110 to separate the teeth 1104a, 1104b from each other, followed by movement of the crankshaft 1101 to rotate the crankshaft 1101 relative to the lug 1102 by a desired offset, corresponding to one or more teeth pitch increments. The actuation signal can then be removed, allowing the teeth 1104b on the lug 1102 to return into contact with the teeth 1104a on the crankshaft 1101 at the desired offset. Operation of the crankshaft can then continue with the crankshaft 1101 offset from the lug 1102.

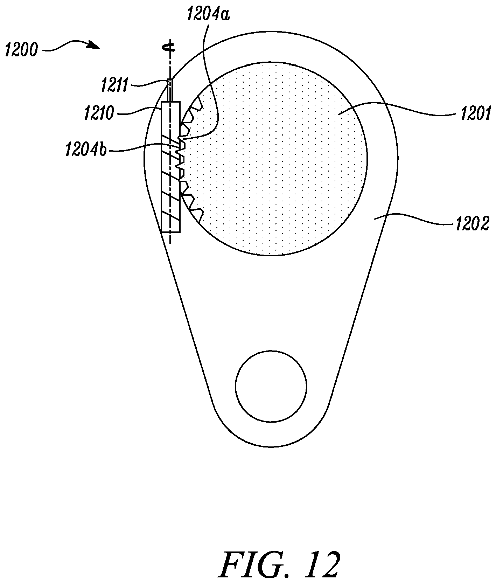

A further alternative example embodiment is illustrated in Figure 12, in which the teeth 1204a on the crankshaft 1201 are engaged with corresponding teeth 1204b on a worm screw 1210 in the lug 1202 in a worm drive arrangement. The worm screw 1210 can be turned about a longitudinal axis 1211 to cause the rotational position of the crankshaft 1201 to be adjusted relative to the lug 1202. One complete turn of the worm screw 1210 then corresponds to an adjustment of the lug 1202 one tooth pitch relative to the crankshaft 1201. This adjustment may for example be achieved by manually adjusting the worm screw 1210 or by driving the worm screw using a motor (not shown), which may be a servo motor arranged to rotate the worm screw by known increments. Adjustment of the relative position of the crankshaft 1201 and lug 1202 can be carried out simply by rotating the worm screw 1210. If using a motor to drive the worm screw 1210 this may even be carried out during normal operation of the crankshaft assembly.

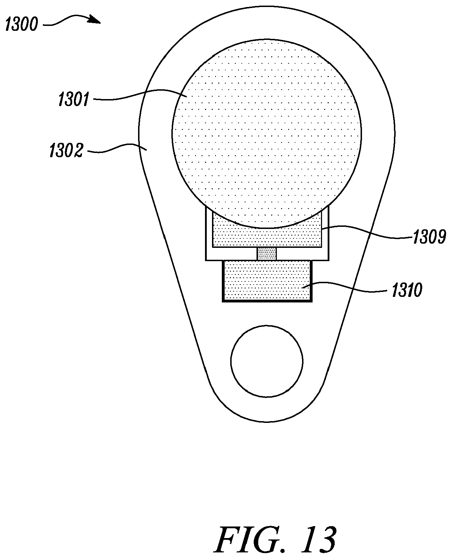

A further alternative example of a crankshaft assembly 1300 is illustrated in Figure 13 in which, rather than interlocking teeth, the lug 1302 and crankshaft 1301 are clamped together by friction with a releasable clamping element 1309. The clamping element 1309 is in the example shown in the form of a shoe that provides a clamping force against the crankshaft, similar in form to a railway brake shoe. The clamping element 1309 is biased against the crankshaft 1301 to maintain a clamping force, and may be released from contact either manually or with an actuator such as a solenoid 1310 in a similar way to the example shown in Figure 11. Other clamping arrangements may also be possible, such as the use of more than one clamping element distributed around the crankshaft or a clamping ring wrapped around the crankshaft that tightens around the crankshaft to secure the lug to the crankshaft. The clamping element may alternatively be provided as part of the crankshaft so that the clamping element operates in a way similar to an automobile drum brake.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A crankshaft assembly (800) for a gas turbine engine guide vane actuator, the crankshaft assembly (800) comprising:
a crankshaft (801) mounted for rotation about a central axis (811);
a lug (802) mounted to the crankshaft (801) for rotation with the crankshaft (801) about the central axis (811), the lug (802) having a first end (803) with a crankshaft connection (820) securing the lug (802) to the crankshaft (801) and a second opposing end (805) for connecting the lug (802) to a control rod (408) such that rotation of the crankshaft (801) causes actuation of the control rod (408) in a direction orthogonal to the central axis (811),
wherein the crankshaft connection (820) is adjustable to allow the first end of the lug (802) to be secured relative to the crankshaft (801) over a range of rotational positions about the central axis (811).

2. The crankshaft assembly (800) of Claim 1 wherein the crankshaft connection (820) comprises interlocking teeth (804a, 804b) on the crankshaft (801) and the lug (802).

3. The crankshaft assembly (800) of Claim 2 wherein the teeth (804b) on the lug (802) are biased into contact with the teeth (804a) on the crankshaft (801).

4. The crankshaft assembly (800) of Claim 3 wherein the teeth (804b) on the lug (802) are configured to separate from contact with the teeth (804a) on the crankshaft (801) to allow the crankshaft (801) to rotate relative to the lug (802).

5. The crankshaft assembly of Claim 4 comprising an adjustment element (809) comprising the teeth (804b) on the lug (802), the adjustment element (809) connected to the lug by first and second pivot points (807a, 807b) and comprising first and second arms (808a, 808b) extending from opposing sides of the lug (802), wherein actuation of the first or second arms (808a, 808b) causes the adjustment element (809) to pivot about the respective second or first pivot points (807a, 807b) to separate the interlocking teeth (804a, 804b) from each other.

6. The crankshaft assembly (800) of Claim 5 comprising first and second end stops (1001a, 1001b) arranged to contact the first and second arms (808a, 808b) respectively upon rotation of the crankshaft (801) beyond an angular rotation limit (901) to cause the interlocking teeth (804a, 804b) to separate from each other.

7. The crankshaft assembly (1100) of Claim 4 comprising an actuator (1110) connected to the teeth (1104b) on the lug (1102) and configured upon actuation to separate the teeth (1104b) on the lug (1102) from the teeth (1104a) on the crankshaft (1101) to allow rotation of the crankshaft (1101) relative to the lug (1102).

8. The crankshaft assembly (1200) of Claim 2 wherein the lug (1202) comprises a worm gear (1210), rotation of the worm gear (1210) causing rotation of the crankshaft (1201) relative to the lug (1202).

9. The crankshaft assembly (1300) of Claim 1 comprising a releasable clamping element (1309) between the lug (1302) and the crankshaft (1301).

10. A guide vane actuator assembly (400) for a gas turbine engine, comprising:
a hydraulic actuator (401) connected for actuating a first control rod (402);
a crankshaft assembly (800) according to any preceding claim, the crankshaft assembly (800) comprising an actuator lug (405) pivotally connected to the first control rod (402);
a second control rod (408) pivotally connected between the second end (805) of the lug (802) and a guide vane actuator ring (412), the guide vane actuator ring (412) connected to a series of actuator levers (501) connected to ends (502) of a corresponding series of pivotally mounted guide vanes.

11. A gas turbine engine (10) for an aircraft comprising:
an engine core (11) comprising a turbine (19), a compressor (14), and a core shaft (26) connecting the turbine to the compressor;
a fan (23) located upstream of the engine core, the fan comprising a plurality of fan blades;
a guide vane assembly located downstream of the fan, the guide vane assembly comprising a guide vane actuator assembly according to Claim 9.

12. The gas turbine engine according to claim 11 comprising a gearbox (30) that receives an input from the core shaft (26) and outputs drive to the fan so as to drive the fan at a lower rotational speed than the core shaft.

13. The gas turbine engine according to Claim 12, wherein:
the turbine is a first turbine (19), the compressor is a first compressor (14), and the core shaft is a first core shaft (26);
the engine core further comprises a second turbine (17), a second compressor (15), and a second core shaft (27) connecting the second turbine to the second compressor; and
the second turbine, second compressor, and second core shaft are arranged to rotate at a higher rotational speed than the first core shaft.
